# EUROPÄISCHE PATENTANMELDUNG

(11) **EP 4 492 614 A1**
(43) Veröffentlichungstag der Anmeldung: **15.01.2025**
(21) Anmeldenummer: 24000081.0
(22) Anmeldetag: 26.06.2024
(51) Int. Cl.: H02J 3/38

(54) **AC - NETZLEISTUNGS-EINSPEISEBLOCKER**

(30) Priorität: 30.06.2023 DE 102023002682
(71) Anmelder: Arens, Karl Gottfried, 52072 Aachen (DE)
(72) Erfinder: Arens, Karl Gottfried, D-52072 Aachen (DE)

(57) **Zusammenfassung**

Der Netz-Einspeiseblockierer findet typischerweise Anwendung beim Betrieb von Photo-Voltaik-Anlagen, bei denen der Betreiber eine sog. Nulleinspeisung der gewonnen elektrischen Leistung erreichen möchte.

Das Patent beschreibt eine Vorrichtung in Form einer elektronischen Schaltung zum Betrieb typischerweise in einem 230Volt-Wechselstromnetz, mit der eine Leistungseinspeisung elektrischer Leistung von einem Haus-, Gewerbe- oder Subnetz in das öffentliche Stromnetz verhindert werden kann, ohne dass ein Leistungsbezug elektrischer Leistung aus dem öffentlichen Netz in das Subnetz dadurch eingeschränkt wird. Dadurch wird es ermöglicht, dass ein maximaler Anteil der intern gewonnenen Leistung zum späteren Eigenverbrauch zwischengespeichert werden kann.

Der Einspeise-Bockierer regelt die Einspeiseblockierung selbstständig, zeitgenau und je Sinus-Halbwelle neu. Eine Leistungsregelung des verwendeten Wechselrichters ist hierbei zur Erreichung einer Null-Einspeisung nicht mehr erforderlich. Der Leistungs-Einspeise-Blockierer wird typischerweise zwischen der elektrischen 16A-Haushalts-Sicherung und den Verbraucher-Einheiten eingebracht.

Eine alternative Anwendungsweise stellte es dar, wenn der Leistungs-EinspeiseBlockierer in einer mobilen Verteilerleiste untergebracht ist. In diese Verteilerleiste können nach Wahl Verbrauchseinheiten eingesteckt werden, um einzelne Geräte bevorzugt mit Photovoltaik-Leistung zu versorgen.

## Beschreibung

Vorrichtung, elektrische oder elektronische Schaltung, welche es bei miteinander verbundenen Wechselstromnetzen ermöglicht, die Leistungsfortpflanzung an der Schnittstelle zwischen den beiden Netzen nur in eine vorgewählte Vorzugsrichtung zu gewähren, während die Leistungsfortpflanzung in die jeweils andere Richtung blockiert werden kann bzw. blockiert wird.

Unbeschadet dessen bleibt dabei die Möglichkeit zum Fluss der Ladungsträger (der Elektronen) des Wechselstroms in beide Richtungen (bidirektional) erhalten.

Kurzname: Die Vorrichtung wird im Weiteren kurz **NEBL** für AC-Netzleistungs-Einspeiseblocker genannt.

Anwendungsfall: Der NEBL kann (ohne Begrenzung der Allgemeinheit) Anwendung finden insbesondere bei Verwendung von Solaranlagen, die über einen Wechselrichter mit dem öffentlichen Stromnetz in Verbindung stehen oder allgemein zwei Stromnetze, die miteinander verbunden sind, leistungsmäßig derart entkoppeln, dass der Leistungsfluss durch den NEBL nur in einer vorgewählte Richtung (z.B. vom übergeordneten Netz in das Subnetz) erfolgen kann.

### Anforderungen:

Technisches/genehmigungs-rechtliches Problem: Bei der Ankopplung (einer Vielzahl privater) Wechselrichtern, die mit dem öffentlichen Stromnetz in Verbindung stehen, könnte (so die Argumentation der Netzbetreiber) die Stabilität des öffentlichen Stromnetzes negativ beeinflussen. Die Ankopplung privater Wechselrichter und deren Leistungseinspeisung in das öffentliche Stromnetz, unterliegt daher behördlichen Auflagen bzw. Regulierung.

Betriebswirtschaftliches Problem: Elektrische Leistung, die in einer (proprietären) Solaranlage gewonnen wird, kann wahlweise ganz oder teilweise in das öffentliche Stromnetz eingespeist werden. Der nicht eingespeiste Anteil der gewonnen Arbeit/ Leistung kann selbst genutzt oder zur späteren Nutzung in einem Akku zwischengespeichert werden. Die eingespeiste Leistung kann vom Netzbetreiber vergütet werden, sofern der Betreiber und Einspeiser keine Verzichtserklärung zur (netto-) Einspeisevergütung abgegeben hat.

Im Allgemeinfall ist die Einspeisevergütung pro Energiemenge/Leistungseinheit, die der Netzbetreiber entrichtet, deutlich geringer als der Tarif, den der Betreiber der Solaranlage selbst entrichten muss, sofern er Leistung vom Netzbetreiber bezieht bzw. zurückkaufen will oder muss. Um möglichst wenig elektrische Leistung hochpreisiger hinzukaufen zu müssen, ist der Betreiber einer proprietären Solaranlage mit Eigennutzung und Teileinspeisung daher bestrebt, einen möglichst hohen Anteil an Strom-Selbstversorgung zu erzielen,.

Betriebswirtschaftliches/naturgegebenes Problem: Eine Solaranlage kann - vom Diffuslichtverhalten bei bewölktem Himmel mal abgesehen - nur während den Sonnenstunden elektrische Leistung gewinnen und bereit stellen. Die Verteilungskurve des Verbrauchs der elektrischen Leistung hängt hingegen vom Nutzungsverhalten und von den Einschaltzeiten der angeschlossenen elektrischen Geräten ab. Der Stromverbrauch zeigt mitunter starke Leistungsabnahmespitzen, sodass der Betrag der augenblicklich erzeugten Leistung im Allgemeinen nicht mit der lokal angeforderten elektrischen Leistung übereinstimmt. Unter Berücksichtigung der vorgenannten betriebswirtschaftlichen Begrenzungen würde dies - ohne weitere Vorkehrungen - zu einer Minderung der Rentabilität der Solaranlage führen.

Ziel: Ziel der Vorrichtung des Netz-Einspeiseblockers ist es, den Betrag der Leistung, die in das öffentliche Netz eingespeist wird, zu minimieren und sogar zu Null (bzw. kleiner als die Messfehler des Stromzählers) zu führen. Die nicht eingespeiste Energie, die auch nicht sofort selbst genutzt wird, kann daher in einem geeigneten Speicher/Akku zwischengespeichert werden. (siehe Skizze 5.1)

Stand der Technik: Am Markt verfügbare Null-Einspeise-Anlagen habe das o. g. Problem dadurch näherungsweise vorläufig so gelöst, dass die Leistungsabgabe des netzgesteuerten Wechselrichters variabel gemacht wird und dieser in der momentanen Leistung gesteuert wird. Ein Mess-Sensor (typischerweise in der Nähe des Sicherungskastens/Verteilerkastens) misst, ob Leistung in das öffentliche Stromnetz eingespeist wird oder werden könnte und regelt d. h. begrenzt die Leistung des Wechselrichters (durch Funk- oder Fernübertragung) derart, dass die Leistungseinspeisung in das öffentlich Stromnetz gegen Null tendiert.

Lösung, NEBL Wirkungsweise: Eine elektronische Schaltung, die (oBdA) typischerweise zwischen öffentlichem Stromnetz und Verbrauchereinheiten geschaltet wird, stellt eigenständig fest, in welche Richtung der Leistungsfluss erfolgt bzw. erfolgen sollte bzw. erfolgen würde und blockiert einen Leistungsabfluss elektrischer Leistung in das externe bzw. öffentliche Stromnetz. Die nicht abgeflossene und nicht verbrauchte Energie kann in einem Akku zur späteren internen Verwendung zwischen gespeichert werden. Sollte der Wechselrichter der Solaranlage selbst bei maximaler Leistung weniger Leistung bereit stellen, als die Verbraucher der Verbrauchseinheit (Wohnung, Haus oder Gewerbe) insgesamt anfordern, so kann zusätzliche Leistung vom öffentlichen Stromnetz ungehindert von außerhalb der Verbrauchereinheit bezogen werden.

Die Ermittlung der Richtung des Leistungsflusses ist Stand der Technik, und wird z. B. auch in elektronischen oder elektro-/mechanischen Stromzählern oder vorgenannten Leistungssteuerungen von Wechselrichtern angewendet. Allerdings blockieren die reinen Stromzähler das Einspeisen elektrischer Leistung in das öffentliche Stromnetz nicht.

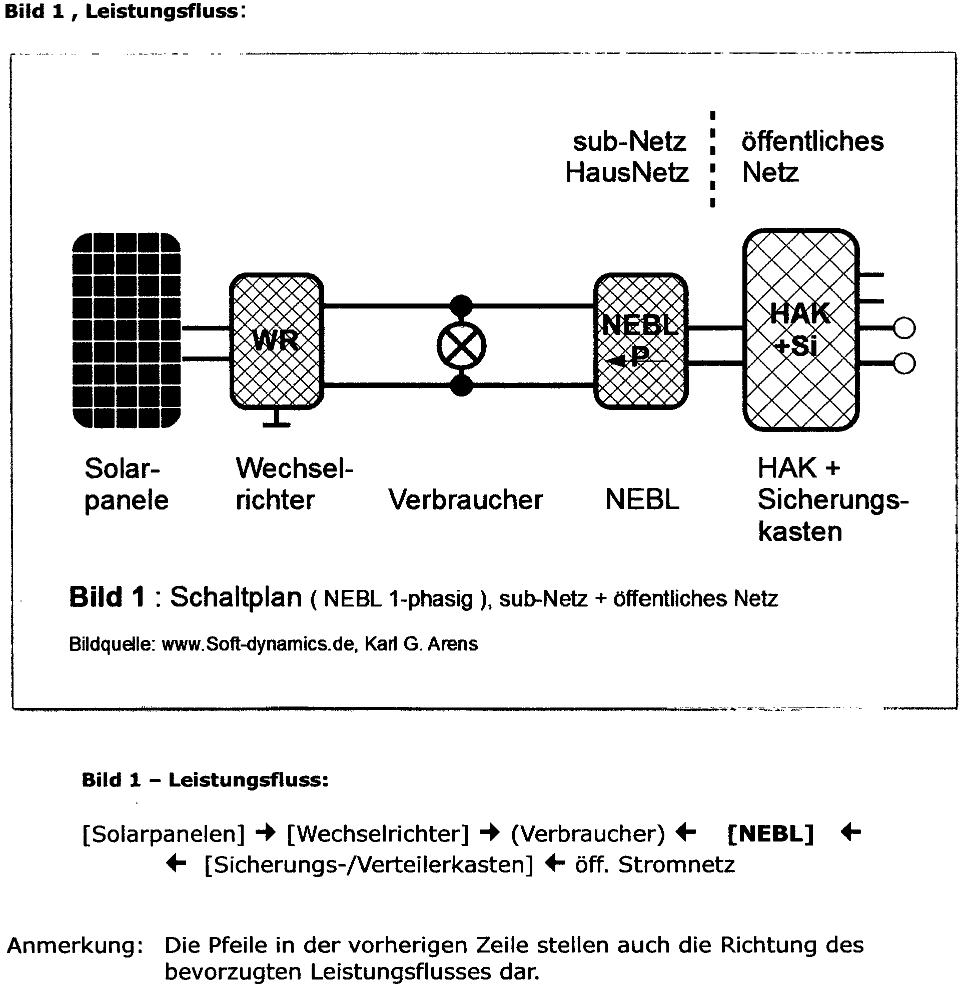

Lösung/Theorie: Die Richtung des Leistungsflusses kann ermittelt werden, indem die augenblickliche Polarität der Sinus-Halbwelle des Phasenleiters (oBdA: L1, .. ) gegenüber dem Nulleiter (N) mit der augenblicklichen Richtung des Ladungsflusses verglichen und auf elektronischem Wege ausgewertet wird. Dabei gibt es unabhängig von Netz-Einspeise-Blockierer vier verschiedene Zustände. siehe nachfolgende Wahrheits-Tabelle:

| **Lfd. Nr.** | **Phasenpolarität (L1-N)** | **Ladungsfluss e+** | **Leistungsfluss** | **mit NEBL** |
|---|---|---|---|---|
| 1 | positive Halbwelle | einwärts | Leistungsbezug | |
| 2 | positive Halbwelle | auswärts | Leistungsabfluss | geblockt |
| 3 | negative Halbwelle | auswärts | Leistungsbezug | |
| 4 | negative Halbwelle | einwärts | Leistungsabfluss | geblockt |

Wobei beim Verständnis zum Ladungsfluss gesehen werden sollte, dass sich der Wechselrichter der Solaranlage mit dem Stromnetz der jeweiligen Phasenleitung (L1 .. L3) sowohl in der Phase, als auch in der Amplitude synchronisiert, sodass die Spannungen des Phasenleiters des Wechselrichters als auch des Phasenleiters des öffentlichen Stromnetzes - bis auf minimale Unterschiede - sich zu jedem Zeitpunkt auf annähernd gleichem Potenzial befinden.

Anschaulich: Ein Ladungsfluss ist dabei wie eine Verschiebung von Eis-Pucks auf einer nur leicht geneigten Eisfläche. Die Leistungseinspeisung ist dabei vielmehr strom- bzw. ladungsgesteuert und weniger spannungsgesteuert.

Lösung, elektronische Schaltung:
Die elektronische Schaltung besteht im Kern z. B. aus vier (oder mindestens zwei mittels AND-Gatter angesteuerten) marktüblichen Thyristoren (nebst obiger Steuerlogik), wobei jeweils 2 Thyristoren (mit gleicher Diodenrichtung) als Thyristoren-Paar in Reihe geschaltet sind. Ein Thyristoren-Paar ist (gemäß der ihr innewohnenden Diodenwirkung) für den Ladungsfluss einwärts und das andere Thyristoren-Paar für den Ladungsfluss auswärts zuständig bzw. vorgesehen und werden individuell angesteuert. Einer der Thyristoren eines Thyristoren-Paares wird an der Steuerleitung (Gate) leitend getriggert, wenn die Phasenpolarität die erforderliche Polarität hat und der jeweils andere Thyristor des Paares wird leitend getriggert, wenn der Ladungsfluss bzw. Potenzialdifferenz den Ladungsfluss in definierter Richtung generiert bzw. generieren sollte. Die in Reihe geschalteten Thyristoren erlauben - im Sinne einer logischen UND-Verknüpfung - nur dann einen Leistungsfluss, wenn beide der in Reihe geschalteten Thyristoren gemeinsam frei geschaltet sind. Alternativ kann auch nur ein Tyristor je Ladungs-Flussrichtung ausreichend sein, wenn die UND-Logik der Steuerung in einer vorgeschalteten Logik bewerkstelligt wird.

| | |
|---|---|
| Skizze der Schaltung: | siehe Bilder 3, 4 und 9 elektronische Schaltung als Blockschaltbild |

### Vorteile:

a) Die gesamte Funktionalität zur Leistungseinspeise-Blockierung ist in EINER elektronischen Schaltung untergebracht, welche die Logikregeln zur Einspeiseblockung selbst auswertet. Eine Verbindung (ob per Funk oder Kabel) zwischen räumlich getrenntem Sensor im Verteiler-/ Sicherungskasten und entfernt gelegenem Wechselrichter entfällt.
b) Die Entscheidung, ob eine Einspeise-Blockierung erfolgen soll, kann für jede Sinus-Halbwelle des Wechselstroms von der Elektronik individuell und neu getroffen werden - bei einer 50 Hz Netzfrequenz also alle 0,01 Sekunden (10 mSec). Eine externe Steuerung des Wechselrichters, noch dazu über eine zeitliche Durchschnittswertbetrachtung der erforderlichen oder gewünschten Leistung des Wechselrichters erübrigt sich.
c) Ein übergeordnetes (öffentliches) Stromnetz kann durch Verwendung eines (oder mehrerer NEBLs) vor der Einspeisung aus Subnetzen und damit auch vor Schwankungen eingespeister Leistung aus dem Sub-Netz geschützt werden.
d) Durch Verwendung mehrerer (ggf. kaskadiert angeordnete) NEBLs können mehrere Subnetze individuell abgetrennt bzw. abgesichert oder versorgt werden.
e) Durch Verwendung zweipoliger (d.h. 1-phasiger) NEBLS (auf L1 gegenüber N) kann ggf. eine all-polige Abblockung der Solaranlage erreicht werden.
f) Wirtschaftlicher Vorteil: Durch die Verwendung von NEBLs kann der Betreiber eines Sub-Netzes (Haus- oder Wohnungs- oder Gewerbe-Netzes) über die Verwendung der selbst gewonnenen, überschüssigen Energie zeitversetzt selbst verfügen - anstatt diese einzuspeisen.
g) Im Falle einer zeitweiligen, regionalen Überproduktion oder eines Überangebotes an einspeisbaren Solar-Energieleistung kann der NEBL die Einspeisung von Leistung in des öffentliche Netz verhindern. Es ist also nicht mehr erforderlich, den netz-gesteuerten Wechselrichter in diesen Fällen (per Netzfrequenzsteuerung) ganz abzuschalten.

### Mögliche Variante(n):

v1) Obwohl es zur Leistungstrennung ausreichend ist, den aktiv leistungsblockierenden NEBL nur dem/den Phasenleiter(n) zuzuordnen, besteht die Möglichkeit, je einen NEBL (bei entspre-chendem Schaltungsdesign) sowohl an der Phasenleitung als auch am Nulleiter anzubringen. Hierdurch kann leistungsmäßig eine all-polige leistungsmäßige Trennung vom übergeordneten Netz erreicht werden.
   Hinweis: Beim Anbringen eines oder mehrerer NEBLs an einem gemeinsamen Nulleiter sollte darauf geachtet werden, dass die maximale Stromstärke für die der NEBL ausgelegt ist (z. B. 16 A) , am Null-Leiter nicht überschritten werden kann. Ggf. ist pro Phasenleiter je ein separater Nulleiter (Aufspaltung des gemeinsamen Nulleiters in mehrere Zweige mit je einem Nulleiter-NEBL) zu verlegen, bzw. je eine Sicherung auch für den Nulleiter einzurichten.
v2) Keine Beschränkung der Allgemeinheit: Es besteht grundsätzlich die Möglichkeit, in einem Sub-Netz (Hausstromnetz), dieses Subnetz in weitere d. h. mehrere Subnetz einzurichten und diese separat abzusichern.

### Gewerbliche Anwendbarkeit:

Durch Realisierung als elektronischer Baugruppe kann diese als zusteckbares Fertiggerät (nach Zertifizierung und Lizensierung) über den Groß- oder Einzelhandel gewerblich vertrieben und vom Fach-Elektriker eingebaut werden. Denkbar sind zunächst Einsteckmodule für den Sicherungskasten, in Serie mit der Stromsicherung aber im Weiteren auch in der Bauform mobiler sog. Verteilerleisten die einen NEBL, eine Einspeisesteckdose für den Wechselrichter und mehrere SCHUKO-Steckdosen enthalten, um ggf. auch einzelne Stromgeräte separat abzusichern bzw. vorzugsweise mit sog. "grünem" Solarstrom versorgen zu können.

Der betriebswirtschaftliche Nutzen ergibt sich für den Betreiber allein schon aus der Differenz zwischen Einspeisevergütung je kWh und dem Bezugspreis von Stromleistung je kWh aus dem öffentlichen Netz, insbesondere auch dadurch, dass Einspeisung zu einer geringeren Vergütung vom Betreiber vermieden werden kann, deren Leistung ggf. zu einem späteren Zeitpunkt bei bestehendem Mehrbedarf zu einem, im Allgemeinen merklich höheren Preis wieder zurück gekauft werden müsste.

### Allgemeiner, erweiterter Nutzen:

Die Anwendung der Erfindung der unidirektionalen Leistungsflussregelung ist nicht à priori auf die Anwendung an einer Verbindungsstelle von elektrischen Wechselstromnetzen, noch auf die Anwendung unter Verwendung von Photovoltaik-Anlagen begrenzt. Der mögliche Anwendungsbereich erstreckt sich darüber hinaus auf die Anwendung in der Physik bzw. Elektrotechnik allgemein bzw. auf die Klassifizierungen Physik, Elektrotechnik und Verteilnetze (G05F, H02J und H02S) allgemein.

Ob der Leistungsfluss gewährt oder blockiert wird, wird von der Schaltung je Sinushalbwelle neu bestimmt.

Der Grund für den Entwurf einer Schaltung mit Entscheidung zur Steuerung je Sinus-Halbwelle liegt darin, dass sowohl die Leistung der Photovoltaikanlage (bei wechseln wolkigem Wetter) minütlich oder auch sekündlich schwankt, als auch das Verbrauchsverhalten der betreffenden Wohn- oder Gewerbeeinheit beim Zu- oder Abschalten elektrischer Verbrauchern im Sekundenzeitraum stark schwanken kann und im Allgemeinen schwankt.

Mögliche erweiterte Anwendungsbeispiele:
Die beiden miteinander in Verbindung stehenden Wechselstrom-Netze können (oBdA) zum Beispiel bestehen aus:
a) zwei Wechelstromnetze oder -teilnetze, die über je eine eigene Wechselstrom-Leistungsquelle verfügen, phasensynchronisiert sind aber in der Phasendifferenz - auch vorzeichenbehaftet - aus diversen Gründen schwanken können.

| | |
|---|---|
| Beispiel: | öffentliches Wechselstromnetz und Hausnetz mit fremdgesteuertem Wechselrichter; |

b) einem Wechselstromnetz mit mindestens einem angeschlossenem Verbraucher elektrischer Leistung innerhalb eines Teilnetzes, der ein nicht rein ohmsches Verbrauchsverhalten zeigt und damit wechselnde Phasenverschiebungen und Leistungsflussverhalten im Teilnetz gegenüber dem übergeordneten Netz hervorruft.

| | |
|---|---|
| Beispiel: | Verbraucher mit nicht rein ohmschem Verbrauchsverhalten d. h. mit auch induktiven oder kapazitiven Eigenschaften; |

c) zwei Teilnetze innerhalb einer Gewerbeeinheit oder auch innerhalb der Schaltung eines Elektrogerätes, wobei ein Teilnetz gegenüber Leistungsabfluss in ein anderes Teilnetz geschützt werden soll.
d) proprietäres Netz mit abrechnungsmäßig unabhängigen Verbrauchseinheiten

| | |
|---|---|
| Beispiele: | Mehrparteien-Wohnanlagen, Kleingartenanlagen oder Dauercampingplätze; |

### Anlagen/Anmerkungen:

### A.1) Anmerkungen, Ausblick und elektro-ingenieurmäßige Ausgestaltung:

Für die Ausgestaltung der im Kapitel "Ansprüche" angemeldete Funktionalität sind - sowohl für die Einspeiseblockung als auch für die Steuerelektronik, welche die Thyristoren bzw. Schaltelektronik ansteuern - mehrere (um nicht zu sagen ungezählte) Varianten an elektronischen Schaltungen möglich. Es ist keineswegs zwingend, für die Realisierung der Funktionalität Thyristoren zu verwenden.

Denkbar ist auch eine Art Servo-Schaltung, bestehend aus einem Satz Relais, das die angestrebte Funktionalität - Leistungseinspeiseblockung aus dem übergeordneten Netz - zeitweilig hilfsweise bewerkstelligt. Ein Servo aus Relais könnte konfigurierbar gemacht werden, in der Weise, dass von einer Steuerelektronik alle 10 Sekunden bis 15 Minuten geprüft wird, ob sich der Status (Einspeisung oder Blockierung) geändert hat und entsprechend reagiert.

Für den Moment des Übergangs von Blockierung zu Einspeisung muss allerdings ingenieurmäßig sichergestellt werden, dass die jeweilige Phase des sub-Netzes mit der Phase des übergeordneten Netzes übereinstimmt. Dazu könnte eine geringe Restleistung (< 1 Watt) oder statische Spannungsinformationen aus dem übergeordneten Netz bezogen werden - um die Steuerelektronik, als auch den Wechselrichter permanent zu informieren.

Der netz-gesteuerte Wechselrichter sollte darauf eingestellt sein, dass dieser ggf. nicht die gesamte, bereitstellbare Leistung in das sub-Netz einspeisen kann, nämlich dann, wenn im sub-Netz (z.B. Haushalt) von der Summe der Verbraucher nicht die gesamte bereitstellbare Leistung angefordert, d. h. verbraucht wird. Der Wechselrichter sollte diesen Fall der geringeren Leistungsabnahme erkennen und sich ggf. selber abregeln können. Im Fall geringerer Leistungsabnahme im subNetz besteht die Möglichkeit, die nicht verbrauchte Leistung/Energie zwischen zu speichern. Das Design oder ggf. Redesign netz-gesteuerter Wechselrichter oder Zusatzgeräten ist vielmehr Gegenstand ingenieurmäßiger Ausgestaltung und liegt außerhalb der durch die Ansprüche der Erfindung bezeichneten Erfindung dieser Patentanmeldung.

### A.2) Glossar, Synonyme und Begriffsklärung:

### Glossar/Synonyme:

| | |
|---|---|
| Solaranlage: | Photo-Voltaikanlage |
| NEBL: | Netzleistungs-Einspeiseblocker, Netz-Einspeisesperre, Wechselstrom-Leistungs-Einspeiseblocker |
| HAK | Haus-Anschlusskasten |
| Netz-Einspeiseblocker: | Leistungs-Einspeiseblocker, Leistungs-Einspeisesperre |
| öffentliches Stromnetz: | übergeordnetes oder externes Stromnetz |
| Null-Einspeise-Anlagen: | stromerzeugende Anlagen oder Solaranlagen, die keine Leistung in das übergeordnete / öffentliche Stromnetz einspeisen |
| Verbrauchseinheit: | typischerweise Wohnung, Haus oder Gewerbeeinheit |
| Leistungstransport: | Leistungsfortpflanzung |
| Leistungsfortpflanzung : | Transport der Leistung bzw. Energie pro Zeit im Raum |
| e+: | in der Halbleiter-Technologie auch als Elektronen-Löcher bezeichnet |
| Leistung: | = Energie / Zeit ( Energietransport pro Zeiteinheit) |
| oBdA: | ohne Beschränkung der Allgemeinheit |
| Wechselstrom-Teilnetz: | proprietäres Wechselstromnetz zum Beispiel in einem Haus, Mehrfamilienhaus, Häuserpark, Freifläche, Gewerbeeinheit, Bürogebäude , Gewerbe- oder Büropark oder Module eines Elektrogerätes; |
| AND-Gatter | das AND-Gatter sendet ein positives Trigger-Signal an die Trigger-Elektrode des Halbleiter-Bauteils (hier: Thyristor) relativ zur Kathode, wenn beide Eingänge ein positives Triggerssignal erhalten, andernfalls erfolgt kein Trigger-Signal am Ausgang. |
| U-diff-Detektor | der U-diff-detektor sendet ein positives Trigger-Signal an die Trigger-Elektrode des Halbleiterbauteils relativ zur Kathode, wenn die relative Potentialdifferenz der Vorzeichen-Kennzeichnung an seinem + und - Eingang entspricht, andernfalls erfolgt kein Trigger-Signal am Ausgang des U-diff-Detektors. |

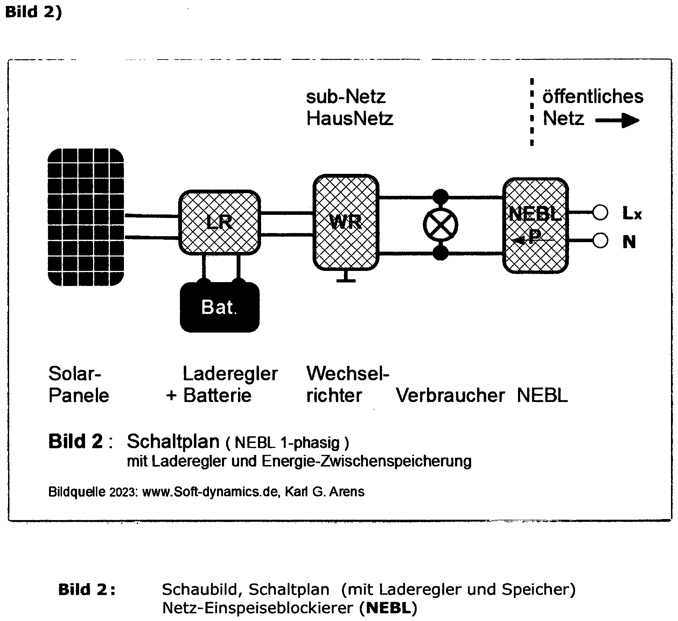

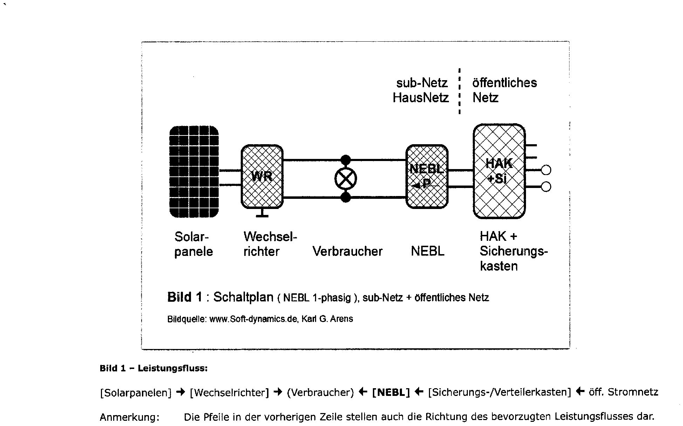

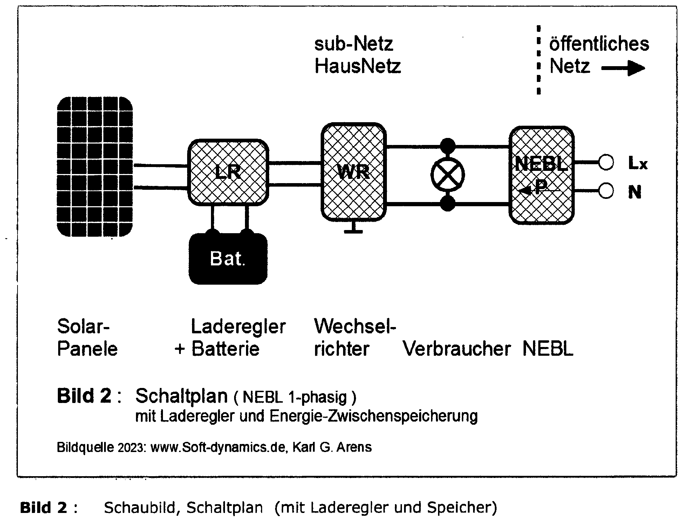

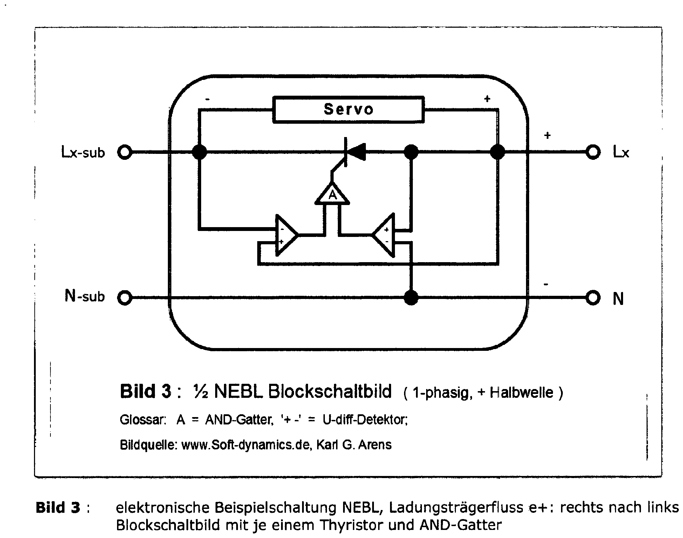

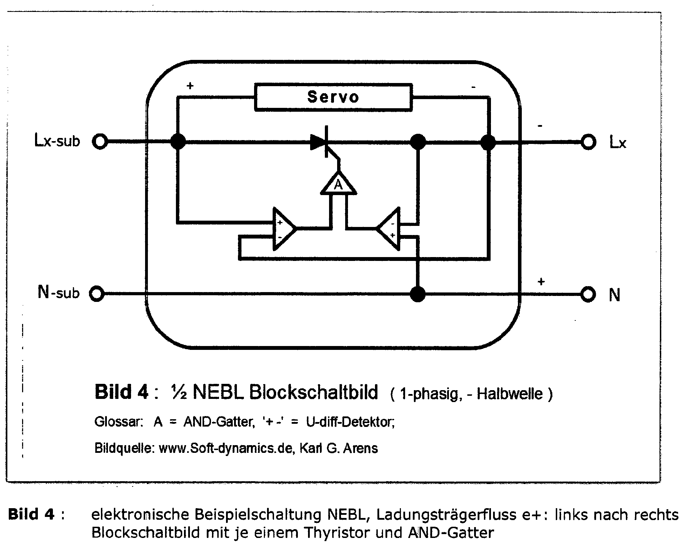

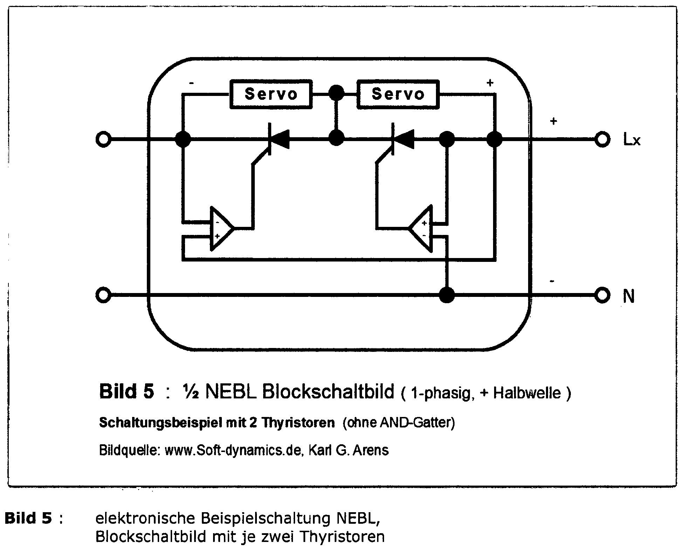

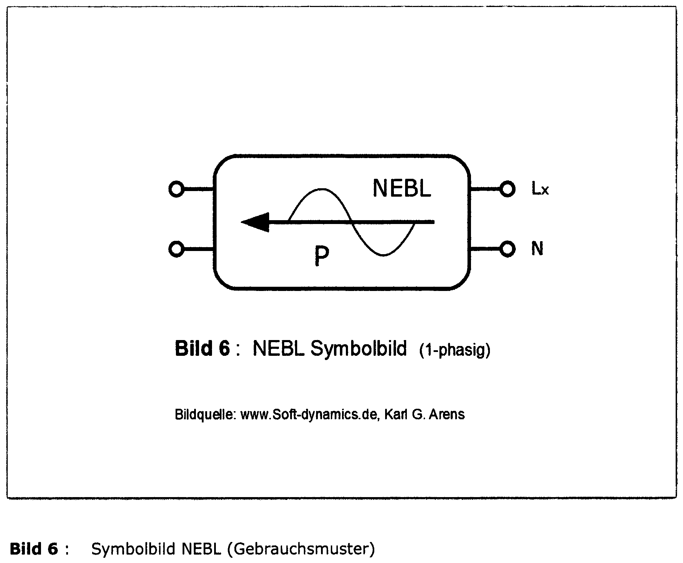

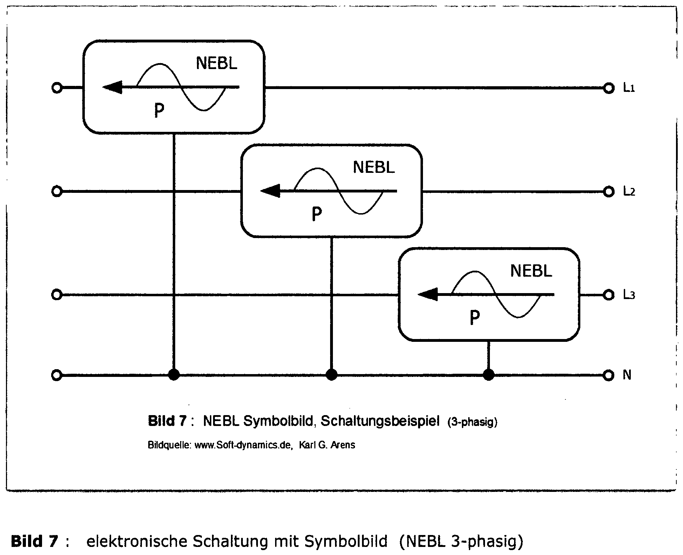

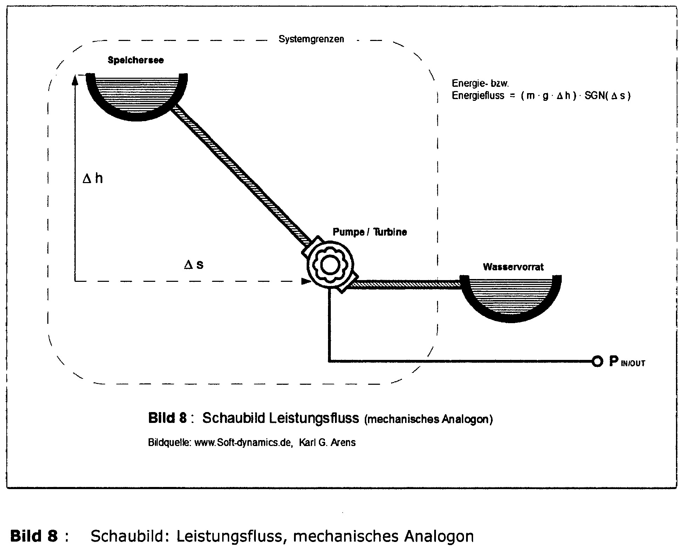

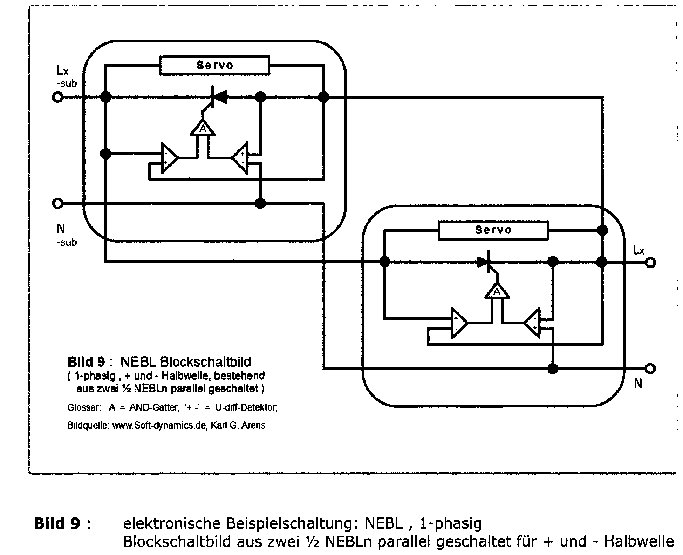

## Patentansprüche

1. Elektronische Schaltung mit n-phasigen Anschlusspaaren bestehend aus zwei Leiterpaaren je Phase als Anschlussmöglichkeiten für je einen Phasen- und Null-Leiter die zur Durchleitung von Wechselstromleistung, welche als Verbindungsbauteil zwischen zwei Wechselstromnetzen dient, wobei die Wechselstromnetze in der Nennfrequenz, Amplitude übereinstimmen und in Phase im zeitlichen Mittel phasen-synchronisiert sind, aber in der Phasendifferenz um einen Mittelwert schwanken und auch im Vorzeichen schwanken können,
wobei die elektronische Schaltung **gekennzeichnet ist dadurch**, dass
die Leistungsfortpflanzung zwischen den Netzen **durch** Einfügen der elektronischen Schaltung in die Verbindungsleitung zwischen den beiden Wechselstromnetzen derart entkoppelt wird, dass der Leistungsfluss in eine der beiden Richtungen der Leiterpaare blockiert wird oder optional blockiert werden kann,
während die Leistungsfortpflanzung in die andere der beiden Richtungen der Leiterpaare stets ungehindert und verlustarm ermöglicht ist (, wobei der Fluss der Ladungsträger bei Freigabe der Leistungsfortpflanzung bidirektional möglich bleibt)
und die Entscheidung über Leistungsfortpflanzung oder Blockierung je Sinus-Halbwelle neu bestimmt wird.
Unteransprüche:

2. wie Anspruch unter 1) wobei die elektronische Schaltung mit Leiterpaaren bestehend aus Phasenleiter und Null-Leiter, **dadurch gekennzeichnet ist, dass** nach Einfügen der elektronischen Schaltung in die Verbindungsstelle zwischen den beiden Wechselstromnetze der Leistungsfluss in eine der Richtung der jeweiligen Leiterpaare blockiert wird und der Leistungsfluss in die andere Richtung des Leiterpaares möglich bleibt.

3. wie Anspruch unter 1) wobei die elektronischer Schaltung, je Sinus-Halbwelle eigenständig und inhärent neu evaluiert, in welcher Richtung des Leiterpaares die Leistungsfortpflanzung d. h. der Leistungsfluss erfolgt bzw. bei Freigabe der Leistungsfortpflanzung erfolgen würde und die Leistungsfortpflanzung in eine gewählte Richtungen der Leiterpaare blockiert wird und die Leistungsfortpflanzung in die andere Richtung stets freigegeben wird.

4. wie Anspruch unter 3) mit elektronischer Schaltung, die **gekennzeichnet ist dadurch**, dass die Schaltung eigenständig und inhärent evaluiert, ob der Leistungsfluss zu gewähren ist, indem für jede Sinus-Halbwelle und ab Beginn einer jeden Sinushalbwelle neu bestimmt wird in welcher Richtung des Leiterpaares die Leistungsfortpflanzung erfolgt oder bei Gewährung der Leistungsfortpflanzung erfolgen würde und bei erfüllter Bedingungen zur Leistungsfortpflanzung einer Triggerleitung einem andernfalls stromlosen Halbleiter einen Steuerimpuls je Sinus-Halbwelle zur Freigabe des Ladungsträgerflusses und damit Leistungsflusses gegeben wird.

5. Wie Anspruch 4) indem die elektronische Schaltung den Strom- bzw. Leistungsfluss durch Verwendung und entsprechender Ansteuerung von Halbleitern mit drei oder mehr Anschlüssen entsprechend der unter 4) bestimmbaren, bestimmten bzw. festgelegten Leistungsflussrichtung blockiert oder durch Senden eines Trigger-Impulses an die Steuerleitung des Halbleiters für jeweils eine Sinus-Halbwelle freigegeben wird.

6. Verfahren zur Bestimmung der Bedingung gemäß der Ansprüche 1) bis 4) ob der Leistungsfluss blockiert oder frei gegeben werden soll,
**dadurch gekennzeichnet, dass**
die Polarität der Spannungsdifferenz zwischen dem jeweiligen Phasen- und Null-Leiter einerseits und Polarität des Potentialgefälles entlang des Phasenleiters und damit Ladungsträger-Flussrichtung andererseits jeweils und insbesondere ab Beginn einer Sinushalbwelle neu bestimmt wird und damit die Richtung des Leistungsflusses unter Verwendung der bekannten Gesetzmäßigkeit der Physik, Fachrichtung theoretischen Elektrodynamik ermittelt wird und in Abhängigkeit von den Polaritäten der Spannungsdifferenzen und im Hinblick auf und in Abhängigkeit von dem unter 1) festgelegten Leistungsflussverhalten einen Steuerimpuls zur Freischaltung des Ladungsträger- und damit auch Leistungsflusses jeweils zu Beginn (Allgemeinfall) oder auch im Verlauf der leistungsdefinierenden Sinus-Halbwelle ab Nulldurchgang der trigger-bestimmenden Spannungsdifferenz (Sonderfall) an die Steuerleitung der verwendeten Halbleiter-Bauelemente gesendet wird.

7. wie Anspruch 5) wobei die verwendeten Halbleiterbauteile der elektronischen Schaltung **gekennzeichnet sind dadurch**, dass sie den Ladungsträger- und damit Leistungsfluss beim nächsten, auf den Triggerimplus folgenden Nulldurchgang der an sie (zwischen Anode und Kathode) anliegenden Spannung bis zum nächsten eintreffenden Triggerimpuls blockieren.

8. wie Anspruch 1) bei Verwendung unter Wechselstrom mit 3 Phasen-Drehstrom = trivialer Spezialfall von Anspruch 1)

9. wie unter 1) und optional zusätzlich mit Steuereinheit, welche bewirkt, dass die Blockierung der Leistungsfortpflanzung optional d. h. konfigurierbar zeitweilig ein- und ausschaltbar gemacht wird.

10. wie unter 1) und optional zusätzlich mit Steuereinheit, welche die Leistungsfluss des blockierten Leistungsflusses wahlweise oder konfigurierbar umleitet oder zwischenspeichert.
